(19) Europäisches Patentamt
European Patent Office
Office européen des brevets

(11) **EP 1 210 807 B1**

(12) **EUROPEAN PATENT SPECIFICATION**

(45) Date of publication and mention
of the grant of the patent:
**02.06.2004 Bulletin 2004/23**

(51) Int Cl.7: **H04L 27/38**

(21) Application number: **00951769.9**

(86) International application number:
**PCT/GB2000/003180**

(22) Date of filing: **18.08.2000**

(87) International publication number:
**WO 2001/015400 (01.03.2001 Gazette 2001/09)**

(54) **QAM DEMODULATOR**

QAM-DEMODULATOR

DEMODULATEUR

(84) Designated Contracting States:
**AT BE CH CY DE DK ES FI FR GB GR IE IT LI LU
MC NL PT SE**

(30) Priority: **20.08.1999 GB 9922002**

(43) Date of publication of application:
**05.06.2002 Bulletin 2002/23**

(73) Proprietor: **Detica Limited
Guildford, Surrey GU2 5YP (GB)**

(72) Inventor: **NEWTON, Timothy
Guildford, Surrey GU2 5YP (GB)**

(74) Representative: **Sharp, Alan Cooper et al
Cooper Sharp & Co,
32 Spencer Street
St Albans, Herts. AL3 5EG (GB)**

(56) References cited:
**EP-A- 0 556 807          EP-A- 0 692 896**

- **EFSTATHIOU D ET AL: "A COMPARISON STUDY
OF THE ESTIMATION PERIOD OF CARRIER
PHASE AND AMPLITUDE GAIN ERROR FOR
16-ARY QAM RAYLEIGH FADED BURST
TRANSMISSIONS" PROCEEDINGS OF THE
GLOBAL TELECOMMUNICATIONS
CONFERENCE (GLOBECOM),US,NEW YORK,
IEEE, 28 November 1994 (1994-11-28), pages
1904-1908, XP000488851 ISBN: 0-7803-1821-8**

## Description

This invention relates to the detection of carrier signals of Quadrature Amplitude Modulated (QAM) signals and Phase-Shift Keyed (PSK) signals and demodulators for demodulating QAM and PSK signals.
With QAM signals, two carrier signals in phase quadrature are amplitude modulated by a modulating signal and combined for transmission. Each transmitted symbol can thus have a relatively large number of phase and amplitude states, which are generally illustrated as signal points in a signal point "constellation" in a phase plane diagram. The binary components (I and Q) of the two carrier signals are plotted with the values of I along a horizontal axis and the values of Q along an orthogonal vertical axis. PSK signals are restricted set of QAM signals, with constellation points on one or more rings in the phase plane diagram.

Phase shift errors cause the constellation points to rotate through an angle φ from the position where the two carriers are in phase quadrature, and it is customary to use correction algorithms to cancel out the rotation and lock the signal.

Conventional QAM demodulators extract from the combined modulated signal, two binary components I and Q modulated in phase quadrature. The combined modulated signal is generally expressed by I cos (2πft) + Q sin (2πft). An oscillator is used to generate two signals in phase quadrature at a frequency close to the anticipated carrier frequency, f, but in phase. The oscillator signals are mixed with the modulated signal to give two channels, I and Q, and an ac component of a frequency twice that of the respective carrier. The ac component is removed leaving two binary signals I and Q.

In order to demodulate the modulated QAM signal, the carrier phase and frequency needs to be accurately determined and extracted from the modulated signal.
All carrier frequency extraction algorithms exploit nonlinearity of the modulated signal. Standard techniques are discussed in Webb and Hanzo, "Modern Quadrature Amplitude Modulation" IEEE Press and Pentech Press, 1994. The main techniques for carrier recovery are:

    (a) times-n carrier recovery where the signal is raised to the power of n, and the signal locked to n-times the carrier frequency; and
    (b) decision directed carrier recovery - where a decision is made as to the nearest constellation point and the error used to modify the frequency.

Decision-directed feedback can only be used for small frequency errors, (much less than bandwidth/n), as the symbols may be incorrectly determined for larger errors. For the same reason the carrier may not be determined if the signal has poor equalisation.

Times-n recovery does not require the signals to be equalised as well as that for decision-directed recovery. Furthermore, times-n recovery has a much wider capture frequency. However, previously known times-n recovery techniques cannot be applied to arbitrary constellations, and do not make use of the symmetry of constellation points.

In document EFSTATHIOU D ET AL: 'A COMPARISON STUDY OF THE ESTIMATION PERIOD OF CARRIER PHASE AND AMPLITUDE GAIN ERROR FOR 16-ARY QAM RAYLEIGH FADED BURST TRANSMISSIONS', PROCEEDINGS OF THE GLOBAL TELECOMMUNICATIONS CONFERENCE (GLOBECOM), US, NEW YORK, IEEE, 28 November 1994, pages 1904-1908 an average phase for incoming symbols is calculated by multiplying the phase of the sampled input vectors by the constellation symmetry n and then deriving an average phase. This average phase is used to correct the phase of the local carrier regeneration.

EP-A-0 556 807 applies a frequency multiplication by a factor N to a demodulated incoming signal of N-phase shift keying modulated signals. The carrier frequency error is obtained from a Fourier transformation of the output of the multiplication stage.

In EP-A-0 692 896 a weighing function is employed for the samples that shall contribute to a phase correction of the local carrier regeneration. As weighing function for a sample the quality of the decision on that sample is used, i.e. the distance to the next constellation point.

The present invention uses the time-n technique but can be applied to arbitrary constellations and makes better use of the symmetry in the constellation information than was possible with previously known times-n recovery techniques. The present invention does not require well-equalised signals and has a wide capture frequency. The technique of the present invention also provides carrier phase detection as well as frequency detection.

In one aspect of the present invention, there is provided a method of detecting a carrier signal of a QAM signal as specified in claim 1.

In another aspect of the invention there is provided a method of demodulating a QAM signal as claimed in claim 2.

In another aspect of the present invention there is provided a carrier signal detector as specified in claim 3.

In another aspect of the present invention there is provided a demodulator as specified in claim 4.

The present invention will now be described, by way of an example, with reference to the accompanying drawings, in which:

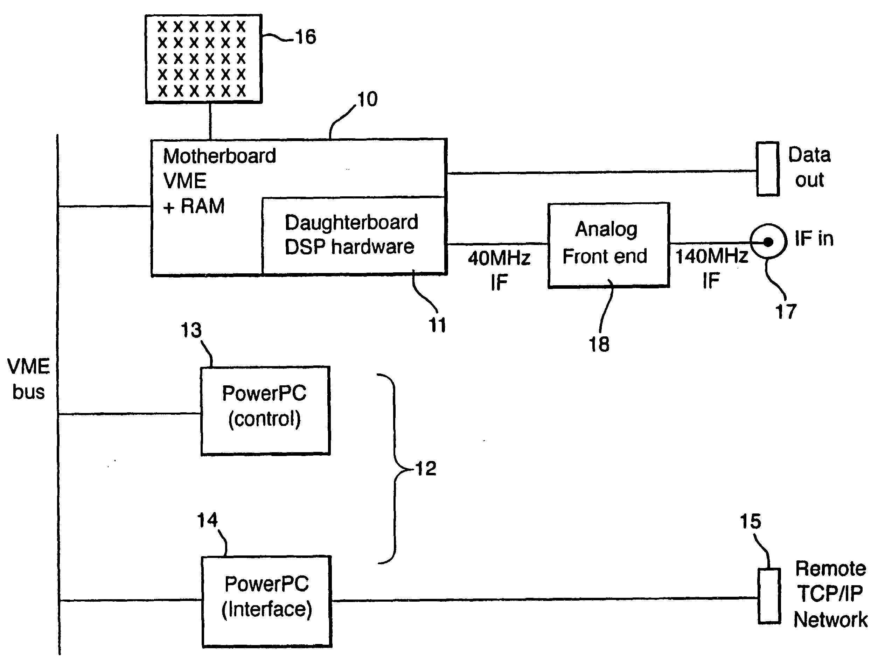

    Figure 1 is a schematic representation of a demodulator constructed in accordance with the present invention.

Referring to Figure 1 the demodulator (10) comprises basically two main components, namely a high performance programmable digital signal processor (11) built around a number of fairly conventional hardware signal processing integrated circuits, and a high power computer 12 comprising two power PC's 13, 14. One of the PC's (13) serves as the controller and the other handles the input and output interfaces.

These two components 11, 12, are coupled, and large RAM buffers are provided to collect snapshots of data which are read by the PC's 13, 14. The PC's 13, 14 are able to upload the required processing parameters to the digital signal-processor 11, and also provide a remote connection facility 15, either via a Wide Area Network (WAN) or serial port.

There is a variety of conventional options available for this interface.

Remote access allows full interactive control of the demodulator 10, including retrieval of snapshot data, uploading digital signal processing data, and uploading of the PC's software.

The digital signal processor (11) provides a generic capability for equalisation filtering and demodulation. Within the underlying constraints of the hardware, such as filter lengths and sampling rates, any signal format can be handled. Standard modulation schemes such as 16, 32, 64, 128, 256, 512,1024 QAM and BPSK, QPSK, S-QPSK, 8-PSK can be handled by the demodulator.

The equalisation method used is a 64 complex tap FIR filter operating on samples at twice the symbol rate.

Mounting of collection operations can be very time consuming. However the present demodulator can be used against unknown signal types and can be programmed in the field to cope with almost any signal type.

The demodulator is provided with a screen 16 on which the constellation points of a phase-plane map can be displayed.

In use of the demodulator 10, the incoming modulated QAM signal (at an intermediate frequency, typically of 140MHz, with an input impedance of 50 ohms), is supplied at the input 17 to an analogue front-end unit 18. The front-end unit 18 converts the 140MHz analogue signal to an analogue signal centred approximately at 40MHz. The 40MHz analogue signal is digitised at a sample rate of 160MHz, and then mixed down to baseband with I and Q channels sampled at 80MHz.

Data are captured from the digitised signal at this point, to identify the approximate symbol rate. The signal is then resampled at twice the symbol clock rate. Data are captured after resampling, and the symbol clock rate is then accurately identified and tracked.

The digitised signal is equalised and decimated by a factor of two to give digital I and Q signals at the symbol rate. These I and Q data are captured and form the input to the carrier recovery which is performed according to the present invention. The detected carrier frequency and phase are used to control a digital mixer, the output of which is passed to a look-up table that translates the I and Q values to the final symbol values. The detected carrier signal is subsequently subtracted from the incoming modulated signal in order to derive the modulating signal of the incoming signal.

## Claims

1. A method of detecting the carrier signal from a QAM signal, comprising the steps of:

   (a) sampling the digital-in-phase binary components I and Q of an incoming QAM modulated signal,
   (b) down-converting the components I and Q to a baseband frequency,
   (c) scaling the components I and Q so that the I and Q magnitudes are those expected for the constellation,
   (d) deriving the average times-n phase by calculating the complex vector $\Phi$ where $\Phi$ is given by: -

$$\Phi(r) = \frac{\Sigma_p w(r\text{-}r_p)\exp(in\varphi_p)}{\Sigma_p w(r\text{-}r_p)}$$

   where

   $p$    is an index running over symbols in the constellation;
   $i$    is the square root of minus 1
   $r_p$    is the radius to the constellation point;
   $\varphi_p$    is the phase of the constellation point;
   $n$    is the constellation symmetry (4 for four-fold symmetry, e.g., for 16QAM); and
   $w$    is a weighting function

   (e) determining the frequency and phase of the carrier signal by calculating the maximum amplitude component in the complex Fourier transform F of data from the samples according to the following equation :-

$$F(\omega) = \Sigma_d W_d \Phi^*(r_d)\exp(in\varphi_d - i\omega d)$$

   where

   $d$    is an index running over data samples;
   $r_d$    is the amplitude of a data sample;
   $\varphi_d$    is the phase of a data sample;
   $W_d$    is a (real positive) windowing function (e. g. Hanning);
   $\omega$    is the normalised angular frequency = $2\pi f$, where $f$ is the real frequency

2. A method of demodulating a QAM signal, including the carrier detection. method of claim 1 for carrier recovery.

3. A carrier signal detector for detecting the phase and frequency of a carrier signal in QAM signals according to the method of claim 1, including or consisting of sampling means for sampling the digital-in-phase binary components I and Q as specified in step a), down converting means for performing step b), phase angle measurement means, carrier phase and carrier frequency determination means for performing step e).

4. A demodulator which performs demodulation of QAM signals according to the method of claim 2, including the carrier signal detector according to claim 3, and QAM signal demodulating means.

**Patentansprüche**

1. Verfahren zum Detektieren des Trägersignals aus einem QAM-Signal, mit den folgenden Schritten:

   (a) Abtasten der phasen-digitalen Binärkomponenten I und Q eines ankommenden QAM-modulierten Signals,

   (b) Abwärtsumsetzen der Komponenten I und Q in eine Basisbandfrequenz,

   (c) Skalieren der Komponenten I und Q dergestalt, daß die I- und Q-Beträge die für die Konstellation erwarteten sind,

   (d) Ableiten der mittleren mal-n-Phase durch Berechnen des komplexen Vektors Φ, wobei Φ durch den folgenden Ausdruck gegeben wird:

$$\Phi(r) = \frac{\Sigma_p w(r-r_p)\exp(in\varphi_p)}{\Sigma_p w(r-r_p)}$$

   wobei

   $p$  ein über Symbole in der Konstellation laufender Index,
   $i$  die Wurzel aus minus 1,
   $r_p$  der Radius zu dem Konstellationspunkt,
   $\varphi_p$  die Phase des Konstellationspunkts,
   $n$  die Konstellationssymmetrie (4 für vierfache Symmetrie, z.B. für 16QAM) und
   $w$  eine Gewichtungsfunktion ist,

   (e) Bestimmen der Frequenz und Phase des Trägersignals durch Berechnen der maximalen Amplitudenkomponente in der komplexen Fouriertransformation F von Daten aus den Abtastwerten gemäß der folgenden Gleichung:

$$F(\omega) = \Sigma_d W_d \Phi^*(r_d)\exp(in\varphi_d - i\omega d)$$

wobei

   $d$  ein über Datenabtastwerte laufender Index,
   $r_d$  die Amplitude eines Datenabtastwerts,
   $\varphi_d$  die Phase eines Datenabtastwerts,
   $W_d$  eine (reelle positive) Fensterfunktion (z. B. Hanning) und
   $\omega$  die normierte Kreisfrequenz = $2\pi f$ ist, wobei f die reelle Frequenz ist.

2. Verfahren zum Demodulieren eines QAM-Signals, einschließlich Trägerdetektion des Verfahrens nach Anspruch 1 zur Trägerwiedergewinnung.

3. Trägersignaldetektor zum Detektieren der Phase und Frequenz eines Trägersignals in QAM-Signalen nach Anspruch 1, mit oder oder bestehend aus Abtastmitteln zum Abtasten der phasen-digitalen Binärkomponenten I und Q gemäß Schritt (a), Abwärts-Umsetzungsmitteln zur Durchführung von Schritt (b), Phasenwinkelmeßmitteln, Trägerphasen- und Trägerfrequenzbestimmungsmitteln zur Durchführung von Schritt (e).

4. Demodulator, der eine Demodulation von QAM-Signalen gemäß dem Verfahren nach Anspruch 2 durchführt, mit dem Trägersignaldetektor nach Anspruch 3 und QAM-Signaldemodulationsmitteln.

**Revendications**

1. Procédé de détection du signal de porteuse à partir d'un signal QAM, comprenant les étapes consistant à :

   (a) échantillonner les composantes binaires en phase numériques, I et Q, d'un signal modulé QAM entrant,.
   (b) abaisser la fréquence des composantes I et Q jusqu'à une fréquence en bande de base,
   (c) mettre les composantes I et Q à l'échelle de façon à ce que les amplitudes I et Q sont celles anticipées pour la constellation,
   (d) obtenir la phase moyenne fois n en calculant le vecteur complexe Φ, où Φ est donné par :

$$\Phi(r) = \frac{\Sigma_p w(r-r_p)\exp(in\varphi_p)}{\Sigma_p w(r-r_p)}$$

   où

p      est un indice couvrant tous les symboles dans la constellation

i      est la racine carrée de -1

$r_p$      est la rayon du point de constellation

$\varphi_p$      est la phase du point de constellation

n      est la symétrie de la constellation (4 pour une symétrie quadruple, par ex. pour 16QAM) ; et

w      est une fonction de pondération

(e) déterminer la fréquence et la phase du signal de porteuse en calculant la composante d'amplitude maximale dans la transformation de Fourier complexe F de données issues d'échantillons, selon l'équation suivante :

$$F(\omega = \Sigma_d \, W_d \Phi^* \, (r_d) \, \exp \, (in\varphi_d - i\omega d)$$

où

d      est un indice couvrant tous les échantillons de données ;

$r_d$      est l'amplitude d'un échantillon de données

$\varphi_d$      est la phase d'un échantillon de données ;

$W_d$      est une fonction de fenêtrage (réelle positive) (par ex. Hanning) ;

$\omega$      est la fréquence angulaire normalisée = $2\pi f$, où f est la fréquence réelle.

2. Procédé de démodulation d'un signal QAM, comportant le procédé de détection de la porteuse selon la revendication 1 pour la récupération de la porteuse.

3. Détecteur de signal de porteuse pour détecter la phase et la fréquence d'un signal de porteuse dans des signaux QAM conformément au procédé selon la revendication 1, comportant ou constitué d'un moyen d'échantillonnage pour échantillonner les composants binaires en phase numériques I et Q comme indiqué à l'étape a), un moyen d'abaissement de la fréquence pour mettre en oeuvre l'étape b), un moyen de mesure de l'angle de phase, un moyen de détermination de la phase de la porteuse et de la fréquence de la porteuse pour mettre en oeuvre l'étape e).

4. Démodulateur assurant la démodulation de signaux QAM conformément au procédé selon la revendication 2, comportant le détecteur de signal de porteuse selon la revendication 3 et un moyen de démodulation de signal QAM.

EP 1 210 807 B1